# EUROPEAN PATENT APPLICATION

(11) **EP 4 432 507 A1**
(43) Date of publication of application: **18.09.2024**
(21) Application number: 22906014.0
(22) Date of filing: 08.10.2022
(51) Int. Cl.: H02J 3/38, H02J 3/32, H02J 3/02, H02M 3/155, H02J 7/35

(54) **OPTICAL STORAGE SYSTEM AND OPTICAL STORAGE SCHEDULING METHOD**

(30) Priority: 17.12.2021 CN 202111555220
(71) Applicant: Huawei Digital Power Technologies Co., Ltd., Shenzhen, Guangdong 518043 (CN)
(72) Inventor: WU, Wenxue, Shenzhen, Guangdong 518043 (CN)
(74) Representative: Maiwald GmbH
(86) International application number: PCT/CN2022/123858
(87) International publication number: WO 2023/109262

(57) **Abstract**

A photovoltaic energy storage system and a photovoltaic energy storage scheduling method are provided. The system includes a controller, an alternating current power grid, at least one photovoltaic module, an inverter, an alternating current bus, an alternating current power distribution cabinet, a direct current bus, an alternating current-direct current circuit, a direct current-direct current circuit, and an energy storage device. The alternating current power grid is connected to the alternating current bus. The photovoltaic module is connected to the inverter. The inverter is connected to the alternating current bus. The alternating current power distribution cabinet is connected to the alternating current bus and the alternating current-direct current circuit. The alternating current-direct current circuit is connected to the direct current bus. The direct current bus is connected to direct current-direct current circuit. The direct current-direct current circuit is connected to the energy storage device. The controller is configured to adjust the energy storage device to a charging state or a discharging state based on total output power of the photovoltaic module, total load power, and a load status of the alternating current power grid. Based on the photovoltaic energy storage system provided in this application, PV deployment reconstruction is simplified while costs of the PV deployment reconstruction are reduced.

## Description

### CROSS-REFERENCE TO RELATED APPLICATIONS

This application claims priority to Chinese Patent Application No. 202111555220.7, filed with the China National Intellectual Property Administration on December 17, 2021 and entitled "PHOTOVOLTAIC ENERGY STORAGE SYSTEM AND PHOTOVOLTAIC ENERGY STORAGE SCHEDULING METHOD", which is incorporated herein by reference in its entirety.

### TECHNICAL FIELD

This application relates to the field of photovoltaic energy generation technologies, and in particular, to a photovoltaic energy storage system and a photovoltaic energy storage scheduling method.

### BACKGROUND

A server is a high-performance computer that provides various services, and has high reliability, availability, manageability, and scalability. Generally, the server is located in an equipment room. Redundancy configuration needs to be performed for power supply of the server, to ensure that the server can still be properly powered under abnormal conditions.

To implement the redundancy configuration for the power supply of the server, there is a demand for performing PV deployment reconstruction on the existing equipment room. PV deployment reconstruction means a solution in which photovoltaic power supply is superposed to basic power supply, photovoltaic panels that meet or exceed a load power requirement are installed, and photovoltaic power supply is preferentially used. With gradual maturity of technologies and decrease of costs of related photovoltaic modules, photovoltaic power supply has been widely used. Photovoltaic is a typical representation of renewable energy, and power supply costs can be reduced in a manner of superposing solar power supply.

However, if PV deployment reconstruction is performed on a direct current bus side of the equipment room, reconstruction costs are high. In addition, PV deployment reconstruction on the direct current bus side can cover only a direct current device on a direct current side, and relies on that a site power supply needs to have a direct current access interface. Further, a direct current device in the equipment room needs to have a direct current coupling point. During actual installation, power-off cutover needs to be performed on the direct current device in the equipment room. However, there are security risks when power-off cutover is performed. If PV deployment reconstruction is performed on an alternating current bus side, an energy storage device that works with a photovoltaic module usually needs to be configured. Therefore, investment costs of PV deployment reconstruction on the alternating current bus side are excessively high, and return on investment (return on investment, ROI) is excessively low. In view of this, a photovoltaic energy storage and power supply architecture that can reduce the costs of PV deployment reconstruction and avoid difficulties in PV deployment reconstruction needs to be proposed.

### SUMMARY

This application provides a photovoltaic energy storage system and a photovoltaic energy storage scheduling method, so that a new photovoltaic energy storage and power supply architecture is formed by performing PV deployment reconstruction on an alternating current bus side and using an original energy storage device on a direct current bus side, thereby simplifying PV deployment reconstruction while reducing costs of PV deployment reconstruction.

According to a first aspect, this application provides a photovoltaic energy storage system. The system includes a controller, an alternating current power grid, at least one photovoltaic module, an inverter, an alternating current bus, an alternating current power distribution cabinet, a direct current bus, an alternating current-direct current AC-DC circuit, a direct current-direct current DC-DC circuit, and an energy storage device. The alternating current power grid is connected to the alternating current bus. The at least one photovoltaic module is connected to the inverter. The inverter is connected to the alternating current bus. The alternating current power distribution cabinet is connected to the alternating current bus, and is further connected to the AC-DC circuit. The AC-DC circuit is connected to the direct current bus. The direct current bus is connected to the DC-DC circuit. The DC-DC circuit is connected to the energy storage device. The inverter is configured to: convert an output voltage of each photovoltaic module to obtain an alternating current voltage, and output the alternating current voltage to the alternating current bus. The alternating current power distribution cabinet is configured to supply power to an alternating current load device. The AC-DC circuit is configured to: convert the alternating current voltage output by the alternating current power distribution cabinet into a direct current voltage, and output the direct current voltage to the direct current bus. The DC-DC circuit is configured to adjust a direct current voltage on the direct current bus, and charge the energy storage device. The controller is configured to adjust a charging state and a discharging state of the energy storage device based on total output power of the at least one photovoltaic module, total load power, and a load status of the alternating current power grid. The total load power includes a sum of load power of the AC-DC circuit and load power of the alternating current power distribution cabinet.

Based on the photovoltaic energy storage system provided in this application, PV deployment reconstruction is performed on an alternating current side. In addition, an original energy storage device on a direct current side is used to form a new power supply architecture, and electric energy generated by a photovoltaic module on the alternating current side is stored in the original energy storage device on the direct current side by using the controller, so that further photovoltaic energy storage linkage can be supported. The inverter on the alternating current side and the energy storage device on the direct current side can work together under unified management of the controller, so that a mains supply peak-cut mode and a photovoltaic self-consumption mode can be switched. This takes an advantage of low power supply costs of PV deployment reconstruction, and further reduces reconstruction difficulty and costs.

In a possible implementation, the controller is further configured to: obtain load data of the alternating current power grid, determine, based on the load data of the alternating current power grid, a load valley time period and a load peak time period of the power grid, determine the load valley time period of the alternating current power grid as a first time period, and determine the load peak time period of the alternating current power grid as a second time period. The controller is specifically configured to: when the total output power of the at least one photovoltaic module is not greater than the total load power, adjust the energy storage device to a charging state if the alternating current power grid is in the first time period, or adjust the energy storage device to a discharging state if the alternating current power grid is in the second time period. In the foregoing manner, the charging state of the energy storage device is scheduled through the controller. Energy storage charging is performed when the alternating current mains supply is at an electricity price valley value or at a low load, and performs energy storage discharging when the alternating current mains supply is at a peak price or at a peak load, so that photovoltaic and energy storage are combined to ensure reliable power supply.

In a possible implementation, the controller is specifically configured to: when the total output power of the at least one photovoltaic module is greater than the total load power, adjust the energy storage device to the charging state. When the total output power of the at least one photovoltaic module is greater than the load power of the AC-DC circuit, it indicates that the at least one photovoltaic module can still have redundant electric energy to discharge after meeting load supply power on the alternating current side (the load power of the AC-DC circuit and the load power of the alternating current power distribution cabinet). Therefore, the energy storage device can continue to be charged, so that electric energy generated by the at least one photovoltaic module is fully used.

In a possible implementation, the controller is specifically configured to: when the total output power of the at least one photovoltaic module is greater than the total load power and remaining dischargeable electric energy of the energy storage device is less than a magnitude of first specified electric energy, adjust the energy storage device to the charging state. In the foregoing manner, if the remaining dischargeable electric energy of the energy storage device is not less than the magnitude of first specified electric energy, the alternating current power grid may not be used to charge the energy storage device. The alternating current power grid continues to charge the energy storage device after the total output power of the at least one photovoltaic module is greater than the load power of the AC-DC circuit. However, when the remaining dischargeable electric energy of the energy storage device is less than the magnitude of first specified electric energy, the alternating current power grid needs to be used to charge the energy storage device. Charging is stopped until the remaining electric energy of the energy storage device reaches the first specified electric energy again. Therefore, energy storage costs can be further reduced.

In a possible implementation, the controller is specifically configured to: when the total output power of the at least one photovoltaic module is less than a specified power threshold, adjust the energy storage device to the discharging state. When no photovoltaic power is generated at night, the energy storage device discharges to reduce power consumption of the alternating current power grid and create a power margin condition for the energy storage device to use photovoltaic charging in a next day.

In a possible implementation, the inverter is connected to the alternating current bus through an alternating current circuit breaker. The connection is implemented through an alternating current circuit breaker input reserved in an equipment room or a newly added alternating current power distribution facility. Therefore, connection costs of the photovoltaic module are reduced, PV deployment reconstruction is simplified, and a security risk caused by power-off cutover is avoided.

In a possible implementation, the photovoltaic energy storage system further includes a maximum power point tracking MPPT controller. The MPPT controller is connected to each photovoltaic module. The MPPT controller is configured to track a power generation voltage of each photovoltaic module, and adjust power of each photovoltaic module to a maximum power point. Input power is calculated by detecting an input voltage and an input current in real time, and the inverter is enabled to implement maximum power tracking on the input power of the photovoltaic module according to some preset algorithms. In this way, the photovoltaic module can output more electric energy to a next stage, thereby improving an energy yield.

In a possible implementation, the photovoltaic energy storage system further includes: a generator and automatic transfer switching equipment ATS. The automatic transfer switching equipment includes: a first input port, a second input port, and an output port. The first input port is connected to the alternating current power grid. The second input port is connected to the generator. The output port is connected to the alternating current bus. The controller is configured to: when the alternating current power grid normally supplies power, control the first input port to be connected to the output port; and when the alternating current power grid stops supplying power, control the second input port to be connected to the output port, and control the generator to provide electric energy for the alternating current bus. The generator can replace the alternating current power grid to supply power when the alternating current power grid is faulty. The alternating current bus can receive electric energy provided by the alternating current power grid, and can also receive electric energy provided by the generator. The ATS may switch to a status of supplying power by the alternating current power grid. In other words, the ATS may receive the electric energy provided by the alternating current power grid and output the electric energy to the alternating current bus. The ATS may also switch to a status of supplying power by the generator. In other words, the ATS may receive the electric energy provided by the generator and output the electric energy to the alternating current bus. In addition, the photovoltaic energy storage system may further include an uninterruptible power supply. The ATS may further include a third input port. The third input port is connected to the uninterruptible power supply. When the alternating current power grid stops supplying power, the third input port is controlled to be connected to the output port, and the uninterruptible power supply is controlled to provide electric energy for the alternating current bus.

According to a second aspect, this application provides a photovoltaic energy storage scheduling method, applied to the photovoltaic energy storage system according to the first aspect. The method includes: determining total output power of at least one photovoltaic module, total load power, and a load status of an alternating current power grid, where the total load power includes a sum of load power of an AC-DC circuit and load power of an alternating current power distribution cabinet; and adjusting an energy storage device to a charging state or a discharging state based on the total output power of the at least one photovoltaic module, the total load power, and the load status of the alternating current power distribution cabinet.

In a possible implementation, the method further includes: obtaining load data of the alternating current power grid, determining a load valley time period and a load peak time period of the power grid based on the load data of the alternating current power grid, determining the load valley time period of the alternating current power grid as a first time period, and determining the load peak time period of the alternating current power grid as a second time period. The adjusting an energy storage device to a charging state or a discharging state based on the total output power of the at least one photovoltaic module, the total load power, and the load status of the alternating current power distribution cabinet includes: when the total output power of the at least one photovoltaic module is not greater than the total load power, adjusting the energy storage device to a charging state if the alternating current power grid is in the first time period, or adjusting the energy storage device to a discharging state if the alternating current power grid is in the second time period.

In a possible implementation, the adjusting an energy storage device to a charging state or a discharging state based on the total output power of the at least one photovoltaic module, the total load power, and the load status of the alternating current power distribution cabinet includes: when the total output power of the at least one photovoltaic module is greater than the total load power, adjusting the energy storage device to a charging state.

In a possible implementation, the adjusting an energy storage device to a charging state or a discharging state based on the total output power of the at least one photovoltaic module, the total load power, and the load status of the alternating current power distribution cabinet includes: when the total output power of the at least one photovoltaic module is greater than the total load power, and remaining dischargeable electric energy of the energy storage device is less than a magnitude of first specified electric energy, adjusting the energy storage device to a charging state.

In a possible implementation, the adjusting an energy storage device to a charging state or a discharging state based on the total output power of the at least one photovoltaic module, the total load power, and the load status of the alternating current power distribution cabinet includes:
when the total output power of the at least one photovoltaic module is less than a specified power threshold, adjusting the energy storage device to a discharging state.

These aspects or other aspects of this application are more readily apparent from the following description of embodiments.

### BRIEF DESCRIPTION OF DRAWINGS

FIG. 1 is a schematic diagram 1 of a structure of a photovoltaic energy storage system according to this application;
FIG. 2 is a schematic diagram of a structure of a BUCK circuit;
FIG. 3 is a schematic diagram of a BOOST circuit;
FIG. 4 is a schematic diagram 2 of a structure of a photovoltaic energy storage system according to this application;
FIG. 5 is a schematic diagram 3 of a structure of a photovoltaic energy storage system according to this application; and
FIG. 6 is a schematic diagram of steps of a photovoltaic energy storage scheduling method according to this application.

### DESCRIPTION OF EMBODIMENTS

To make objectives, technical solutions, and advantages of this application clearer, the following further describes this application in detail with reference to the accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to a person skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application.

In recent years, photovoltaic-based new energy power generation is developing rapidly. Photovoltaic power supply superposed on the basis of power supply of an alternating current power grid (also referred to as PV deployment reconstruction) is gradually popular. However, primary energy such as photovoltaic has characteristics of fluctuation and intermittency. Therefore, an energy storage system needs to be deployed to match with PV deployment reconstruction, thereby maximizing energy efficiency of PV deployment reconstruction. In an existing application scenario, if a photovoltaic module is newly added on an alternating current bus side, in other words, the photovoltaic module is connected to an alternating current bus, a corresponding energy storage device, such as a battery system and a battery cluster, needs to be configured on the alternating current bus side. In the foregoing manner, photovoltaic energy storage (a photovoltaic module and an energy storage device) needs to be invested together, and costs are excessively high. In addition, energy storage devices already exist on most direct current bus sides (for example, in an equipment room scenario), and a problem of repeated investment exists. However, there is usually no direct current access port for PV deployment reconstruction on the direct current bus side. If PV deployment reconstruction needs to be performed on the direct current bus side, a series of operations such as power-off cutover need to be performed on the equipment in the equipment room. This poses a risk in cut over security and has a high requirement on installation of PV deployment reconstruction.

In view of this, a power supply architecture in which the advantage of low power supply costs of PV deployment reconstruction is considered, reconstruction costs can be reduced, and difficulties in PV deployment reconstruction of the equipment room can be prevented needs to be proposed.

To make objectives, technical solutions, and advantages of this application clearer, the following further describes this application in detail with reference to the accompanying drawings. A specific operation method in a method embodiment may also be applied to an apparatus embodiment or a system embodiment. It should be noted that, in the description of this application, "at least one" means one or more, and "a plurality of" means two or more. In view of this, in embodiments of the present invention, "a plurality of" may also be understood as "at least two". The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects. In addition, it should be understood that terms such as "first" and "second" in the description of this application are merely used for distinguishing and description, but should not be understood as indicating or implying relative importance, or should not be understood as indicating or implying a sequence.

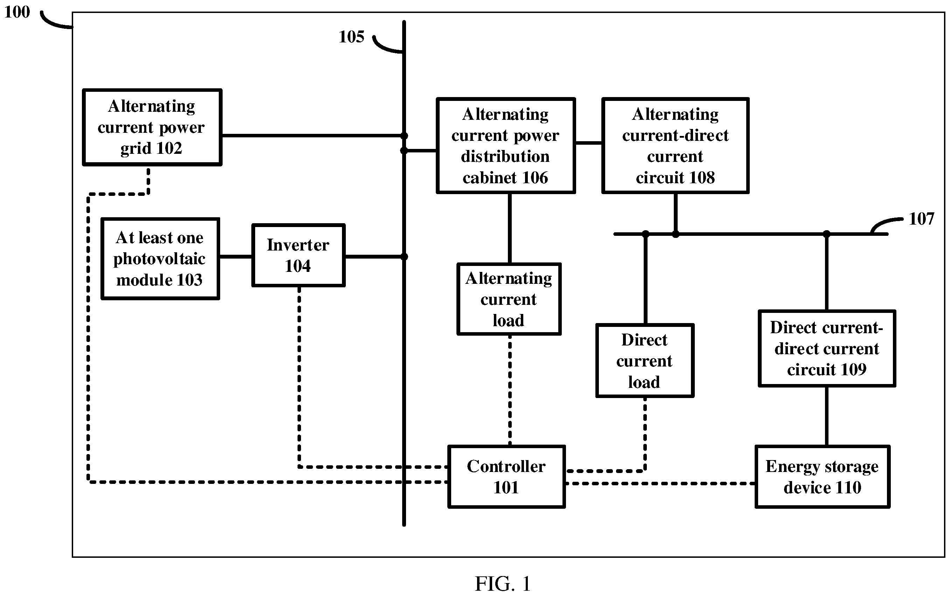

The following first describes a power supply control system according to an embodiment of this application by using a photovoltaic energy storage system 100 shown in FIG. 1 as an example. It should be noted that the following describes an architecture of the photovoltaic energy storage system 100 by using an example in which a direct current/alternating current load is an electric device in the equipment room. Certainly, the direct current/alternating current load may also be replaced with another load device applicable to direct current/alternating current power supply. This is not limited. As shown in FIG. 1, FIG. 1 is a schematic diagram of a structure of a photovoltaic energy storage system 100 according to an embodiment of this application. The system mainly includes: a controller 101, an alternating current power grid 102, at least one photovoltaic module 103, an inverter 104, an alternating current bus 105, an alternating current power distribution cabinet 106, a direct current bus 107, an alternating current-direct current AC-DC circuit 108, a direct current-direct current DC-DC circuit 109, and an energy storage device 110. The at least one photovoltaic module 103 is configured to convert solar energy into direct current electric energy for output.

The alternating current power grid 102 is connected to the alternating current bus 105. The at least one photovoltaic module 103 is connected to the inverter 104. The inverter 104 is connected to the alternating current bus 105. The alternating current power distribution cabinet 106 is connected to the alternating current bus 105, and is further connected to the AC-DC circuit 108. The AC-DC circuit 108 is connected to the direct current bus 107. The direct current bus 107 is connected to the DC-DC circuit 109. The DC-DC circuit 109 is connected to the energy storage device 110.

The inverter 104 is specifically configured to convert an output voltage of each photovoltaic module to obtain an alternating current voltage, and output the alternating current voltage to the alternating current bus 105. Specifically, the inverter 104 is also referred to as an inverter circuit. The inverter 104 or the inverter circuit may convert a direct current voltage output by the at least one photovoltaic module 103 into an alternating current voltage and output the alternating current voltage to the alternating current bus 105. A function of the inverter 104 or the inverter circuit may be alternatively implemented through another circuit, for example, a switching circuit or a filter circuit. An internal structure of the inverter circuit is not specifically limited in this application.

The alternating current power distribution cabinet 106 is configured to supply power to the alternating current load. The alternating current load may be a device that consumes electric energy, for example, a server, a lighting device in the equipment room, or a cooling device. For example, the cooling device may be configured to dissipate heat for the server or reduce an ambient temperature of space in which a power consuming branch is located. This is not limited in this embodiment of this application. For example, to better implement protection and control, a power distribution switch is generally disposed inside the alternating current power distribution cabinet 106. To better implement protection and control, a protection switch is also generally disposed inside the alternating current power distribution cabinet 106. A type and specification of the protection switch inside the alternating current power distribution cabinet 106 may be the same as those of a protection switch outside the alternating current power distribution cabinet 106. A quantity of power distribution switches is related to a quantity of alternating current load devices. This is not specifically limited in this embodiment of this application. In addition, the alternating current power distribution cabinet 106 may further include: an alternating current-alternating current AC-AC circuit. The alternating current power distribution cabinet 106 may obtain an alternating current voltage from the alternating current bus, and performs alternating current voltage adjustment based on an allowed input voltage of the alternating current load device. A specific adjustment manner should be known to a person in the art.

In addition, the alternating current power distribution cabinet 106 may include a plurality of power distribution devices. Each power distribution device is configured to separately supply power to the alternating current load device. Each of the plurality of power distribution devices includes a power module and a cascade circuit. The power module is configured to perform voltage conversion on an alternating current voltage input by the alternating current bus 105, to obtain an output voltage. The output voltage is a power supply voltage of the alternating current load device. The cascade circuit is configured to connect an output end of the power module to an output end of a power module of a power distribution device other than the power distribution device.

Specifically, a power supply device powered by the power distribution device in the alternating current power distribution cabinet 106 may be a server. The cascade circuit may be a cascade box. In other words, each power distribution device in the alternating current power distribution cabinet 106 includes one power module and one cascade circuit.

The AC-DC circuit 108 is configured to convert an alternating current voltage output by the alternating current power distribution cabinet 106 into a direct current voltage, and output the direct current voltage to the direct current bus 107. The AC-DC circuit 108 may further include a unidirectional conductive circuit. When the AC-DC circuit 108 is faulty, the AC-DC circuit 108 is disconnected from another circuit/module.

The DC-DC circuit 109 is configured to adjust the direct current voltage on the direct current bus 107 to charge the energy storage device 110. The energy storage device 110 may include at least one battery or battery cluster and a battery management system (battery management system, BMS). The at least one battery or battery cluster is connected in series or in parallel to form a battery pack array. A quantity of battery clusters can be flexibly increased or decreased based on a backup power requirement or a specified backup power duration. The battery management system is configured to control and adjust output power of the battery cluster through the DC-DC circuit 109. Different quantities of batteries or battery clusters in the energy storage device 110 indicate different backup power or backup power durations corresponding to the energy storage device 110.

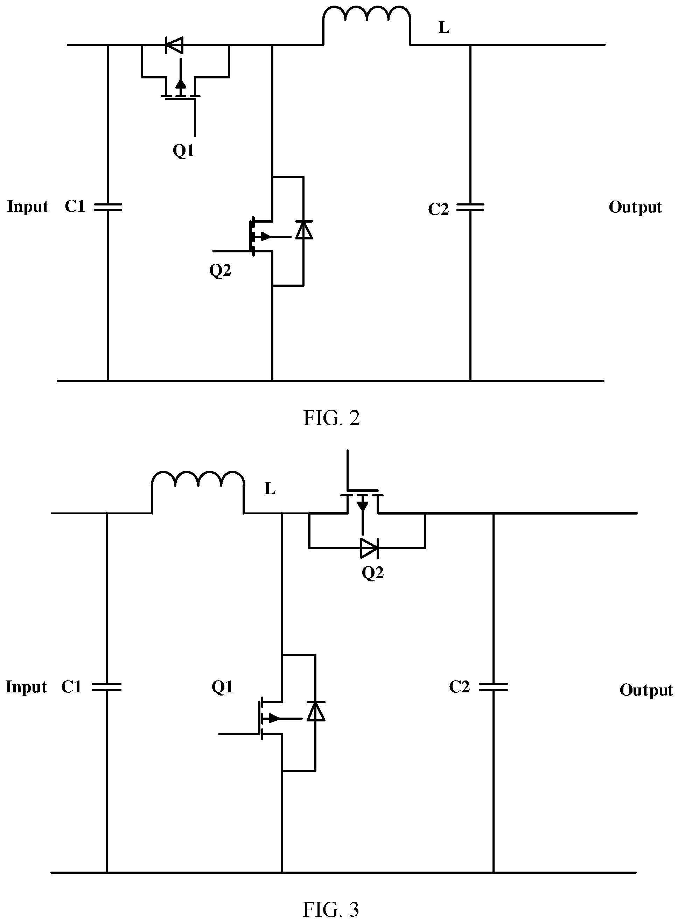

For example, the DC-DC circuit 109 may be a buck circuit. A specific type of the buck circuit is not limited in this embodiment of this application. The buck circuit is configured to perform buck adjustment on an input voltage. Optionally, the DC-DC circuit 109 may be a BUCK buck circuit. FIG. 2 is a schematic diagram of a structure of a BUCK circuit. As shown in FIG. 2, the BUCK buck circuit in FIG. 2 includes a first capacitor C1, a first switch Q1, a second switch Q2, an inductor L, and a second capacitor C2. The first switch Q1 is a switching transistor. The second switch Q2 may be a switching transistor or a diode (in FIG. 3, an example in which the second switch Q2 is a switching transistor is used). A first end of the first capacitor C1 is connected to a first end of the first switch Q1. A second end of the first switch Q1 is connected to both a first end of the inductor L and a first end of the second switch Q2. A third end of the first switch Q1 is configured to input a signal for controlling a status of the first switch Q1. A second end of the second switch Q2 is connected to both a second end of the first capacitor C1 and a first end of the second capacitor C2. A third end of the second switch Q2 is configured to input a signal for controlling a status of the second switch Q2. A second end of the inductor L is connected to a second end of the second capacitor C2.

Alternatively, the DC-DC circuit 109 may be a boost circuit. FIG. 3 is a schematic diagram of a BOOST boost circuit. The BOOST boost circuit shown in FIG. 3 includes a first capacitor C1, an inductor L, a first switch Q1, a second switch Q2, and a second capacitor C2. The first switch Q1 is a switching transistor. The second switch Q2 may be a switching transistor or a diode (in FIG. 3, an example in which the second switch Q2 is a switching transistor is used). A first end of the first capacitor C1 is connected to a first end of the inductor L. A second end of the inductor L is connected to both a first end of the first switch Q1 and a first end of the second switch Q2. A second end of the first capacitor C1 is connected to both a second end of the first switch Q1 and a second end of the second capacitor C2. A second end of the second switch Q2 is connected to a first end of the second capacitor C2. A third end of the first switch Q1 is configured to input a signal for controlling a status of the second switch Q2. A third end of the second switch Q2 is configured to input a signal for controlling a status of the second switch Q2.

The foregoing switching transistor may be controlled by using a pulse width modulation (pulse width modulation, PWM) signal. The controller performs boost or buck adjustment on a voltage on the direct current bus by setting signals of different duty cycles. The switching transistor may be one or more of a plurality of types of switching devices such as a relay, a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), and a silicon carbide (SiC) power transistor, which is not illustrated one by one in this embodiment of this application.

Specifically, the controller 101 is configured to adjust the energy storage device 110 to a charging state or a discharging state based on the total output power of the at least one photovoltaic module 103, the load power of the AC-DC circuit 108, and the load status of the alternating current power grid 102. The load power of the AC-DC circuit 108 may be a sum of rated power specified by all direct current loads connected to the AC-DC circuit 108 and rated power specified by all alternating current loads of the alternating current power distribution cabinet 106. Alternatively, the load power of the AC-DC circuit 108 may be a sum of peak/maximum power specified by all direct current loads connected to the AC-DC circuit 108 and peak/maximum power specified by all alternating current loads of the alternating current power distribution cabinet 106. This is not specifically limited herein.

The controller 101 may be a general-purpose central processing unit (central processing unit, CPU), a general-purpose processor, digital signal processing (digital signal processing, DSP), an application specific integrated circuit (application specific integrated circuits, ASIC), a field programmable gate array (field programmable gate array, FPGA) or another programmable logic device, a transistor logic device, a hardware component, or any combination thereof. The controller 101 may implement or execute various example logical blocks, modules, and circuits described with reference to content disclosed in this application. Alternatively, the controller may be a combination for implementing a computing function, for example, a combination including one or more microprocessors, or a combination of a DSP and a microprocessor. The controller 101 may detect the total output power of the at least one photovoltaic module, the total load power, and the load status of the alternating current power grid at intervals. The controller 101 may be connected to the inverter 104, and determine the total output power of the at least one photovoltaic module based on an output current and an output voltage of the inverter. For example, the load status of the alternating current power grid may include a high-load status, a low-load status, and the like.

The at least one photovoltaic module 103 is configured to convert solar energy into direct current electric energy. The direct current electric energy is converted into alternating current electric energy by the inverter 104 and then provided to an electric device such as an alternating current bus. However, because photovoltaic power generation has fluctuation and intermittency, stronger external environment light indicates more electric energy generated by the photovoltaic module. Therefore, in a case of a relatively good weather, the at least one photovoltaic module 103 may be selected as far as possible to be connected to the alternating current bus to supply power, and redundant electric energy is stored by using the energy storage device 110. Therefore, it needs to be determined, based on the total output power of the at least one photovoltaic module 103 and the load power of the AC-DC circuit 108, that the energy storage device 110 is switched to a charging state or a discharging state. For example, when the total output power of the at least one photovoltaic module 103 is greater than the load power of the AC-DC circuit 108, the energy storage device 110 may be in a charging state. Therefore, redundant electric energy generated by the at least one photovoltaic module 103 is stored in the energy storage device 110.

In addition, to protect the photovoltaic energy storage system 100 when the foregoing fault occurs in the at least one photovoltaic module 103, a residual current detection (residual current device, RCD) circuit may be further disposed in the system provided in this embodiment of this application. A specific product form of the RCD circuit may be a magnetic ring or the like. This is not specifically limited herein.

In a possible implementation, in this embodiment of this application, the controller 101 may be located on an alternating current bus 105 side, or may be located on a direct current bus 107 side. The controller 101 may collect working data and output power of the at least one photovoltaic module 103 and the total load power in a direct sampling manner. In addition, the controller 101 may establish communication with the at least one photovoltaic module 103 and the AC-DC circuit 108, and establish communication with the inverter 104, the alternating current power distribution cabinet 106, and the energy storage device 110 in a wired transmission or wireless transmission manner. For example, wired transmission may include: a wired local area network (local area network, LAN), a serial bus, a controller area network (controller area network, CAN), and a power line carrier (power line communication, PLC). Wireless transmission may include manners such as a 6G\5G\4G\3G\2G, a general packet radio service (general packet radio service, GPRS), a wireless network (Wi-Fi), Bluetooth, ZigBee (ZigBee), and infrared.

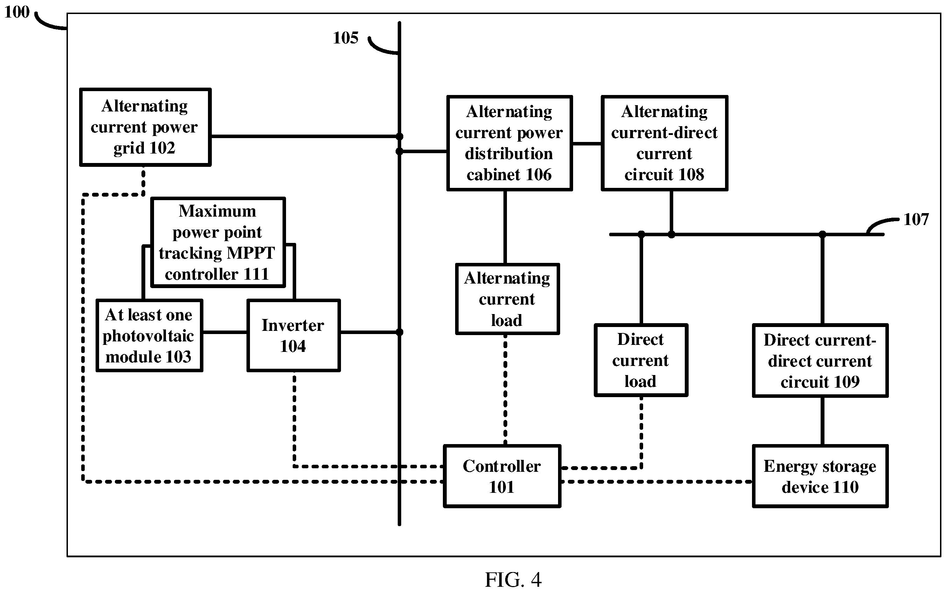

In a possible implementation, as shown in FIG. 4, the photovoltaic energy storage system 100 may further include: an MPPT controller 111 connected to each photovoltaic module. The MPPT controller 111 is configured to track a power generation voltage of each photovoltaic module, and adjust power of each photovoltaic module to a maximum power point. The MPPT controller 111 may be an independent device, or may be a device or module integrated in the inverter 104. A specific form of the MPPT controller is not limited in this application.

Maximum power point tracking (maximum power point tracking, MPPT) means that input power is calculated by detecting an input voltage and an input current in real time, and that a system is enabled to implement maximum power point tracking on the input according to some preset algorithms. In this way, the photovoltaic module can output more electric energy to a next stage, thereby improving an energy yield.

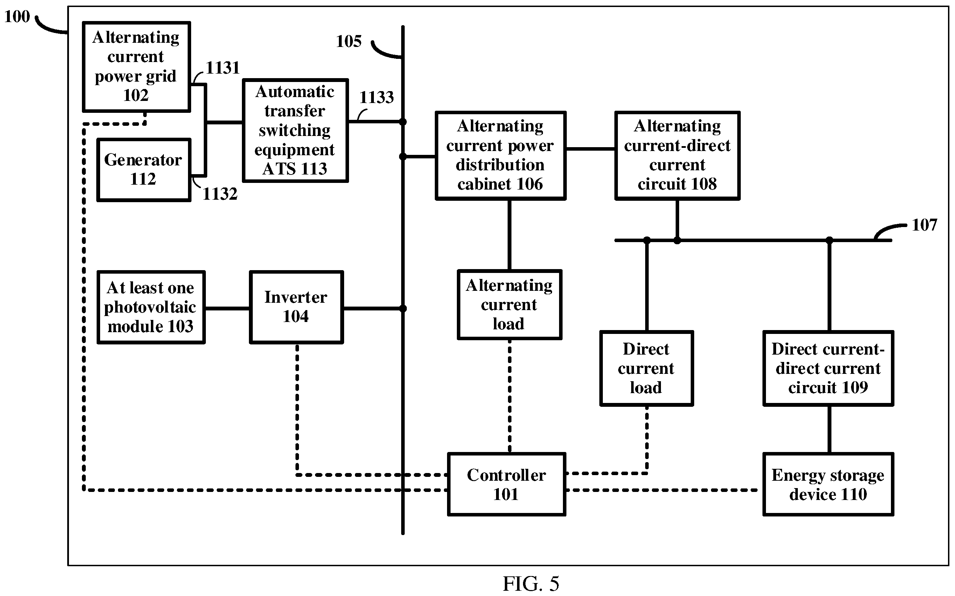

In a possible implementation, as shown in FIG. 5, the photovoltaic energy storage system 100 further includes: a generator 112 and an automatic transfer switching equipment ATS 113. The automatic transfer switching equipment 113 includes: a first input port 1131, a second input port 1132, and an output port 1133. The first input port 1131 is connected to the alternating current power grid 102. The second input port is connected to the generator 112. The output port 1133 is connected to the alternating current bus 105.

The controller 101 is configured to: when the alternating current power grid 102 normally supplies power, control the first input port 1131 to be connected to the output port 1133; and when the alternating current power grid 102 stops supplying power, control the second input port 1132 to be connected to the output port 1133, and control the generator 112 to provide electric energy for the alternating current bus 105.

Specifically, the generator 112 may replace the alternating current power grid 102 to supply power when the alternating current power grid 102 is faulty. The alternating current bus 105 may receive electric energy provided by the alternating current power grid 102, and may alternatively receive electric energy provided by the generator 112. The automatic transfer switching equipment ATS 113 may switch to a status of supplying power by the alternating current power grid 102. In other words, the automatic transfer switching equipment ATS 113 may receive electric energy provided by the alternating current power grid 102 and output the electric energy to the alternating current bus 105. The automatic transfer switching equipment ATS 113 may also switch to a status of supplying power by the generator 112. In other words, the automatic transfer switching equipment ATS 113 may receive electric energy provided by the generator 112 and output the electric energy to the alternating current bus 105.

In a possible implementation, the photovoltaic energy storage system 100 may further include an uninterruptible power supply (uninterruptible power supply, UPS). The automatic transfer switching equipment ATS 113 may further include a third input port. When the alternating current power grid 102 stops supplying power, the third input port is controlled to be connected to the output port 1133, and the uninterruptible power supply is controlled to provide electric energy for the alternating current bus 105.

In this embodiment of this application, photovoltaic energy storage cooperation may be performed in but is not limited to the following manners:
Manner 1: a peak-cut mode. Specifically, in an external environment such as a bad weather/a photovoltaic module being blocked/at night, the total output power of the at least one photovoltaic module 103 is not greater than the load power of the AC-DC circuit 108. Therefore, the at least one photovoltaic module 103 cannot generate redundant electric energy to supply power to the energy storage device 110. However, to ensure that a direct current device can still supply power normally in an abnormal case, the energy storage device 110 needs to be charged, to perform redundancy configuration. An electricity price of the electric energy output by the alternating current power grid 102 varies in different time periods. In a load valley time period, the electricity price is relatively low, while in a load peak time period, the electricity price is relatively high. Therefore, in the load valley time period, the controller 101 may enable the energy storage device 110 to be in a charging state; and in the load peak time period, the controller 101 may enable the energy storage device 110 to be in a discharging state, thereby significantly reducing power consumption costs of the redundancy configuration.

In addition, if the remaining dischargeable electric energy of the energy storage device 110 is not less than the magnitude of first specified electric energy, the alternating current power grid 102 may not be used to charge the energy storage device 110. The alternating current power grid 102 continues to charge the energy storage device 110 after the total output power of the at least one photovoltaic module 103 is greater than the load power of the AC-DC circuit 108. When the remaining dischargeable electric energy of the energy storage device is less than the magnitude of first specified electric energy, the alternating current power grid 102 needs to be used to charge the energy storage device 110 until the remaining electric energy of the energy storage device 110 reaches the first specified electric energy. The first specified electric energy may be related to a magnitude of redundant electric energy needed by the direct current device, and a specific magnitude may be freely set by a person skilled in the art.

Manner 2: a photovoltaic self-consumption mode. Specifically, when the total output power of the at least one photovoltaic module 103 is greater than the load power of the AC-DC circuit 108, it indicates that the at least one photovoltaic module 103 can still have redundant electric energy to discharge after meeting load supply power on the alternating current side (the load power of the AC-DC circuit and the load power of the alternating current power distribution cabinet). Therefore, the energy storage device 110 can continue to be charged, so that electric energy generated by the at least one photovoltaic module 103 can be fully used.

Based on the photovoltaic energy storage system provided in this embodiment of this application, PV deployment reconstruction is performed on the alternating current side. In addition, the original energy storage device on a direct current side is used to form a new power supply architecture, and the electric energy generated by the photovoltaic module on the alternating current side is stored in the original energy storage device on the direct current side by using the controller, so that further photovoltaic energy storage linkage is supported. The photovoltaic inverter on the alternating current side and the energy storage device on the direct current side work together under unified management of the controller, thereby implementing the mains supply peak-cut mode and the photovoltaic self-consumption mode. This takes an advantage of low power supply costs of PV deployment reconstruction, and further reduces reconstruction costs.

This application further provides a photovoltaic energy storage scheduling method, applied to the photovoltaic energy storage system 100 provided in the foregoing embodiment. The method includes: determining total output power of at least one photovoltaic module, total load power, and a load status of an alternating current power grid, where the total load power includes a sum of load power of an AC-DC circuit and load power of an alternating current power distribution cabinet; and adjusting a charging/discharging state of an energy storage device based on the total output power of the at least one photovoltaic module, the total load power, and the load status of the alternating current power grid.

In a possible implementation, the method further includes: obtaining load data of the alternating current power grid, determining, based on the load data of the alternating current power grid, a load valley time period and a load peak time period of the power grid, determining the load valley time period of the alternating current power grid as a first time period, and determining the load peak time period of the alternating current power grid as a second time period. The load valley time period and the load peak time period may be any duration. In addition, and the load valley time period and the load peak time period are not necessarily consecutive. This is not limited in this embodiment of this application.

The adjusting an energy storage device to a charging state or a discharging state based on the total output power of the at least one photovoltaic module, the total load power, and the load status of the alternating current power grid includes: when the total output power of the at least one photovoltaic module is not greater than the total load power, adjusting the energy storage device to a charging state if the energy storage device is in the first time period, or adjusting the energy storage device to a discharging state if the energy storage device is in the second time period.

In a possible implementation, the adjusting an energy storage device to a charging state or a discharging state based on the total output power of the at least one photovoltaic module, the total load power, and the load status of the alternating current power grid includes: when the total output power of the at least one photovoltaic module is greater than the total load power, adjusting the energy storage device to a charging state.

In a possible implementation, the adjusting an energy storage device to a charging state or a discharging state based on the total output power of the at least one photovoltaic module, the total load power, and the load status of the alternating current power grid includes: when the total output power of the at least one photovoltaic module is greater than the total load power, and remaining dischargeable electric energy of the energy storage device is less than a magnitude of first specified electric energy, adjusting the energy storage device to a charging state.

In a possible implementation, the adjusting an energy storage device to a charging state or a discharging state based on the total output power of the at least one photovoltaic module, the total load power, and the load status of the alternating current power grid includes: when the total output power of the at least one photovoltaic module is less than a specified power threshold, adjusting the energy storage device to a discharging state.

In a possible implementation, the adjusting an energy storage device to a charging state or a discharging state based on the total output power of the at least one photovoltaic module, the total load power, and the load status of the alternating current power grid includes: when the total output power of the at least one photovoltaic module is less than a specified power threshold and remaining dischargeable electric energy of the energy storage device is greater than a magnitude of second specified electric energy, adjusting the energy storage device to a discharging state.

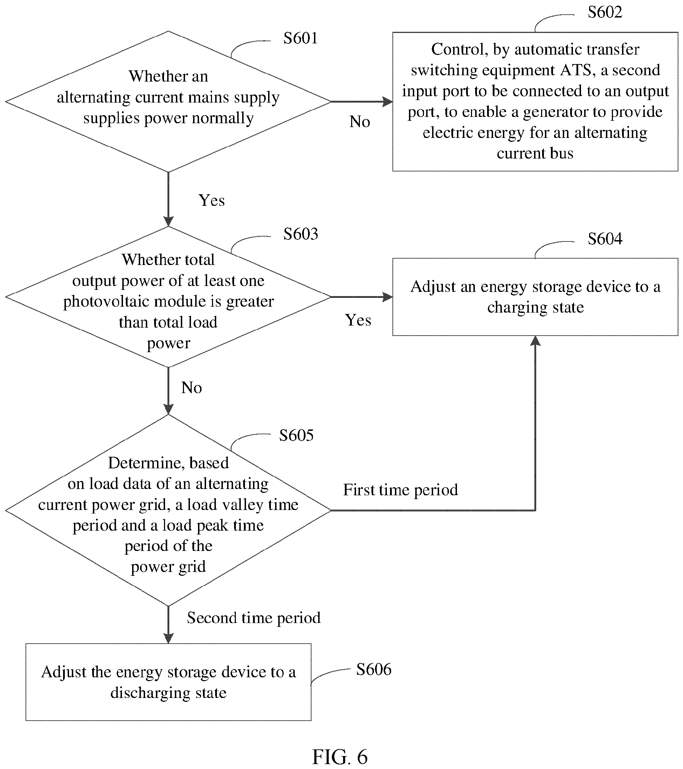

For example, based on the architectures of the photovoltaic energy storage system 100 shown in FIG. 1, FIG. 4, and FIG. 5, this application provides a photovoltaic energy storage scheduling method. Specifically, as shown in FIG. 6, the method may include but is not limited to the following steps:

Step S601: Determine whether an alternating current mains supply supplies power normally, if no, perform step S602, or if yes, perform step S603.

Step S602: Control, by the automatic transfer switching equipment ATS, the second input port to be connected to the output port, to enable the generator to provide electric energy for the alternating current bus.

Step S603: Determine whether the total output power of the at least one photovoltaic module is greater than the total load power, if yes, perform step S604, or if no, perform step S605.

Step S604: Adjust the energy storage device to a charging state.

Step S605: Determine a load valley time period and a load peak time period of the power grid based on load data of the alternating current power grid, determine the load valley time period of the alternating current power grid as a first time period, and determine the load peak time period of the alternating current power grid as a second time period; and if the alternating current power grid is in the first time period, execute step S604; if the alternating current power grid is in the second time period, execute step S606.

Step S606: Adjust the energy storage device to a discharging state.

It should be noted that "connection" in the foregoing embodiments means an electrical connection, and a connection of two electrical components may be a direct connection or an indirect connection between the two electrical components. For example, a connection between A and B may be either a direct connection between A and B, or an indirect connection between A and B through one or more other electrical components. For example, the connection between A and B may be that A and C are directly connected, C and B are directly connected, and A and B are connected through C.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A photovoltaic energy storage system, wherein the system comprises: a controller, an alternating current power grid, at least one photovoltaic module, an inverter, an alternating current bus, an alternating current power distribution cabinet, a direct current bus, an alternating current-direct current AC-DC circuit, a direct current-direct current DC-DC circuit, and an energy storage device;
the alternating current power grid is connected to the alternating current bus; the at least one photovoltaic module is connected to the inverter, the inverter is connected to the alternating current bus, the alternating current power distribution cabinet is connected to the alternating current bus, and is further connected to the AC-DC circuit, and the DC-DC circuit is connected to the direct current bus; the direct current bus is connected to the DC-DC circuit; the DC-DC circuit is connected to the energy storage device;
the inverter is configured to: convert an output voltage of each photovoltaic module to obtain an alternating current voltage, and output the alternating current voltage to the alternating current bus;
the alternating current power distribution cabinet is configured to supply power to an alternating current load device;
the AC-DC circuit is configured to: convert an alternating current voltage output by the alternating current power distribution cabinet into a direct current voltage, and output the direct current voltage to the direct current bus;
the DC-DC circuit is configured to adjust the direct current voltage on the direct current bus to charge the energy storage device; and
the controller is configured to adjust the energy storage device to a charging state or a discharging state based on total output power of the at least one photovoltaic module, total load power, and a load status of the alternating current power grid, wherein the total load power comprises a sum of load power of the AC-DC circuit and load power of the alternating current power distribution cabinet.

2. The photovoltaic energy storage system according to claim 1, wherein the controller is further configured to:
obtain load data of the alternating current power grid, determine, based on the load data of the alternating current power grid, a load valley time period and a load peak time period of the power grid, determine the load valley time period of the alternating current power grid as a first time period, and determine the load peak time period of the alternating current power grid as a second time period; and
the controller is specifically configured to:
when the total output power of the at least one photovoltaic module is not greater than the total load power, adjust the energy storage device to the charging state if the alternating current power grid is in the first time period, or adjust the energy storage device to the discharging state if the alternating current power grid is in the second time period.

3. The photovoltaic energy storage system according to claim 1 or 2, wherein the controller is specifically configured to:
when the total output power of the at least one photovoltaic module is greater than the total load power, adjust the energy storage device to the charging state.

4. The photovoltaic energy storage system according to any one of claims 1 to 3, wherein the controller is specifically configured to:
when the total output power of the at least one photovoltaic module is greater than the total load power, and remaining dischargeable electric energy of the energy storage device is less than a magnitude of first specified electric energy, adjust the energy storage device to the charging state.

5. The photovoltaic energy storage system according to any one of claims 1 to 4, wherein the controller is specifically configured to:
when the total output power of the at least one photovoltaic module is less than a specified power threshold, adjust the energy storage device to the discharging state.

6. The photovoltaic energy storage system according to any one of claims 1 to 5, wherein the inverter is connected to the alternating current bus through an alternating current circuit breaker.

7. The photovoltaic energy storage system according to any one of claims 1 to 6, wherein the photovoltaic energy storage system further comprises a maximum power point tracking MPPT controller, and the MPPT controller is connected to each photovoltaic module; and
the MPPT controller is configured to: track a power generation voltage of each photovoltaic module, and adjust power of each photovoltaic module to a maximum power point.

8. The photovoltaic energy storage system according to any one of claims 1 to 7, wherein the photovoltaic energy storage system further comprises a generator and automatic transfer switching equipment ATS, wherein the automatic transfer switching equipment comprises a first input port, a second input port, and an output port; the first input port is connected to the alternating current power grid, the second input port is connected to the generator, and the output port is connected to the alternating current bus; and
the controller is configured to: when the alternating current power grid normally supplies power, control the first input port to be connected to the output port; and when the alternating current power grid stops supplying power, control the second input port to be connected to the output port, and control the generator to provide electric energy for the alternating current bus.

9. A photovoltaic energy storage scheduling method, applied to the photovoltaic energy storage system according to any one of claims 1 to 8, wherein the method comprises:
determining total output power of at least one photovoltaic module, total load power, and a load status of an alternating current power grid, wherein the total load power comprises a sum of load power of an AC-DC circuit and load power of an alternating current power distribution cabinet; and
adjusting an energy storage device to a charging state or a discharging state based on the total output power of the at least one photovoltaic module, the total load power, and the load status of the alternating current power grid.

10. The method according to claim 9, wherein the method further comprises:
obtaining load data of the alternating current power grid, determining, based on the load data of the alternating current power grid, a load valley time period and a load peak time period of the power grid, determining the load valley time period of the alternating current power grid as a first time period, and determining the load peak time period of the alternating current power grid as a second time period; and
the adjusting an energy storage device to a charging state or a discharging state based on the total output power of the at least one photovoltaic module, the total load power, and the load status of the alternating current power grid comprises:
when the total output power of the at least one photovoltaic module is not greater than the total load power, adjusting the energy storage device to the charging state if the alternating current power grid is in the first time period, or adjusting the energy storage device to the discharging state if the alternating current power grid is in the second time period.

11. The method according to claim 9 or 10, wherein the adjusting an energy storage device to a charging state or a discharging state based on the total output power of the at least one photovoltaic module, the total load power, and the load status of the alternating current power grid comprises:
when the total output power of the at least one photovoltaic module is greater than the total load power, adjusting the energy storage device to the charging state.

12. The method according to any one of claims 9 to 11, wherein the adjusting an energy storage device to a charging state or a discharging state based on the total output power of the at least one photovoltaic module, the total load power, and the load status of the alternating current power grid comprises:
when the total output power of the at least one photovoltaic module is greater than the total load power, and remaining dischargeable electric energy of the energy storage device is less than a magnitude of first specified electric energy, adjusting the energy storage device to the charging state.

13. The method according to claim 9 to 12, wherein the adjusting an energy storage device to a charging state or a discharging state based on the total output power of the at least one photovoltaic module, the total load power, and the load status of the alternating current power grid comprises:
when the total output power of the at least one photovoltaic module is less than a specified power threshold, adjusting the energy storage device to the discharging state.
